# EUROPEAN PATENT SPECIFICATION

(11) **EP 2 539 563 B1**
(45) Date of publication and mention of the grant of the patent: **12.08.2015**
(21) Application number: 11709447.4
(22) Date of filing: 15.02.2011
(51) Int. Cl.: F02B 19/10, F02B 19/12, F02B 19/16, F02M 21/02

(54) **PRE-CHAMBER ARRANGEMENT FOR A COMBUSTION ENGINE**
VORKAMMERANORDNUNG FÜR EINEN VERBRENNUNGSMOTOR
AGENCEMENT DE PRÉ-CHAMBRE POUR UN MOTEUR À COMBUSTION

(30) Priority: 22.02.2010 FI 20105169
(43) Date of publication of application: 02.01.2013
(73) Proprietor: Wärtsilä Finland Oy, 65380 Vaasa (FI)
(72) Inventor: KIVI, Jouni, FI-65320 Vaasa (FI); SILLANPÄÄ, Hannu, FI-65280 Vaasa (FI); SILVONEN, Aulis, FI-65230 Vaasa (FI)
(74) Representative: Berggren Oy Ab
(86) International application number: PCT/FI2011/050140
(87) International publication number: WO 2011/101541

(56) References cited:
- DE-A1- 3 819 220
- FR-A- 1 293 868
- JP-A- 63 032 117
- US-A- 3 082 751

## Description

The invention relates to a pre-chamber arrangement for a combustion engine according to the preamble of claim 1.

In combustion engines, nitrogen oxides (NOx) are created as the mixture of fuel and air burns. Typically, the amount of nitrogen oxides increases as the combustion temperature increases. In particular, high peak combustion temperatures will increase the formation of nitrogen oxides. Peak combustion temperatures and thus the amount of nitrogen oxides formed in the combustion can be decreased by increasing the air/fuel ratio of the fuel mixture, i.e. by using a leaner fuel mixture. Particularly in diesel engines, which are based on compression ignition, large amounts of nitrogen oxides are created. Therefore, the use of gas engines is often desired for the exact reason that, in these, fewer nitrogen oxides are created. Due to a lean fuel mixture, combustion may, however, be imperfect, particularly in piston engines, in which the diameter of the cylinder is large.

Depending on the richness of the fuel mixtures used, ignition in lean mixture or Otto engines does not necessarily occur by itself, rather aids, such as spark plugs, are needed to cause ignition. To intensify the combustion and protect the possible means of ignition, in some lean mixture engines, a pre-chamber is used, which is connected to the combustion area of the cylinder. A richer fuel mixture is fed into the pre-chamber, which is ignited and guided into the combustion area, wherein the leaner fuel mixture in the combustion area ignites. A pre-chamber is used particularly in lean mixture engines using gas as the fuel. In this case, the pre-chamber is generally provided with a spark plug, by means of which the richer fuel mixture is ignited.

Generally, the pre-chambers are rotationally symmetrical. The actual chamber area, in which the fuel is ignited, may vary in shape and may be, for example, spherical or elliptical. The pre-chamber is connected to the main combustion area by a channel, which ends in several nozzle openings. The number, direction and diameter of the openings are optimised according to each situation, taking into consideration, for example, the piston reliefs. Regardless of a relatively high compression ratio, a glow element or a spark plug can be used as an ignition aid.

The disadvantage of the arrangement is the high temperature in the pre-chamber, wherein traditional materials do not withstand, and, for example, heat corrosion may occur. In particular, the nozzle openings are forced to withstand stress, when the combustion reaction progresses from the pre-chamber through the nozzle openings into the combustion area. In this case, it becomes necessary to replace parts or find new, usable materials. Particularly in gas engines, the pre-chamber is subject to extreme high-pressure gradients and maximum pressures.

From US 442696 and FR 1 293 868 are known pre-chamber arrangements, which are complex in structure and support and whose manufacturing costs are thus high. In these known solutions, ceramic materials are used in some of the parts of the pre-chamber. Ceramic materials withstand heat and corrosion well, but are, on the other hand, fragile, expensive and difficult to machine. Additionally, the different heat expansion coefficients of ceramic materials can cause problems in the joints, because particularly the lower part of the pre-chamber with the nozzle openings is subject to stress.

From WO 2009/060119 is known a pre-chamber arrangement, which is, as such, simple in structure and enables inexpensive installation and replacement of parts. In this solution, the joint between the nozzle portion and the body portion with the possible locking parts arranged inside the pre-chamber is, however, directly subject to the high temperatures of the pre-chamber.

The purpose of the invention is to provide an arrangement, which minimizes the problems of known art. In particular, the purpose of the invention is to provide an arrangement that is uncomplicated and durable in structure, enabling simple installation of the pre-chamber and replacement of parts as needed and facilitating maintenance and repair operations.

The objects of the invention are achieved as presented in claim 1 and in greater detail in the other claims. According to the invention, the pre-chamber arrangement comprises a separate pre-chamber bracket, which is arranged between the cylinder head and the pre-chamber and through which the body portion and the nozzle portion are supported on the cylinder head. In this manner, the joint surfaces and parts essential for the attachment of the parts can be kept outside, away from the high temperatures inside the pre-chamber, while the solution enables separate replacement of parts as needed.

The body portion is preferably provided with a separate cover portion, through which the pre-chamber arrangement can be attached to the cylinder head.

In one preferred embodiment, the nozzle portion comprises a first conical surface, by means of which it is supported on the bracket of the pre-chamber, and a second conical surface, by means of which it is supported on the body portion. In this case, said conical surfaces can, preferably, be arranged such that the body portion and the bracket of the pre-chamber keep the nozzle portion held firmly in place.

The pre-chamber arrangement is arranged to be installed on the cylinder head from the opposite side in relation to the main combustion area, wherein the bracket of the pre-chamber defines the position of the nozzle portion towards the main combustion area.

In practice, between the bracket of the pre-chamber and the cylinder head there is a gap in the direction of the diameter of the cylinder, by means of which gap the differently sized heat expansions of the parts can be taken into consideration.

For the installation and structure, it is preferable to arrange that the bracket of the pre-chamber, the body portion and the cover portion are arranged one after the other in the attachment direction of the pre-chamber. Between these parts as well as between the bracket of the pre-chamber and the cylinder head are most preferably arranged gasket rings.

For the stability of the structure, it is preferable that the joint surfaces between the bracket of the pre-chamber and the body portion are stepped.

In practice, the cover portion is provided with ignition means, for example, with feeding means for the pilot fuel and/or with a spark plug, wherein its machine-ability is significant for the selection of material.

The nozzle portion, for its part, is preferably made of a heat, oxidation and/or corrosion resistant material, for example, of ceramics. In these pre-chamber parts, the best characteristics of ceramics can most preferably be utilized.

In particular for manufacturing, it is preferable that the body portion and the locking portion are rotationally symmetric pieces. Thus, also the behaviour of the pieces under variable heat and corrosion conditions is uniform; which is ideal for preventing breakage of the parts.

The invention makes it possible for the body portion, nozzle portion and the bracket of the pre-chamber to be easily replaceable parts.

In the following, the invention is described by way of example with reference to the accompanying schematic drawings, in which
- Fig. shows, as a principle cross-section, an upper portion of a cylinder of the engine and a cylinder head and a cut-away view of a pre-chamber arrangement according to the invention, installed in connection with it,
- Fig. 2 shows, as an enlarged view, parts of the pre-chamber of Fig. 1,
- Fig. 3 shows, as an enlarged view, an alternative embodiment of the parts of the pre-chamber arrangement according to the invention.

In the drawings, reference number 1 refers to a combustion engine, which has a cylinder head 2 and at least one cylinder including a cylinder sleeve 6 and a main combustion area 7. The gas exchange of the cylinder is arranged, in a manner known per se, through the channels of the cylinder head 2 and the valves in connection with them.

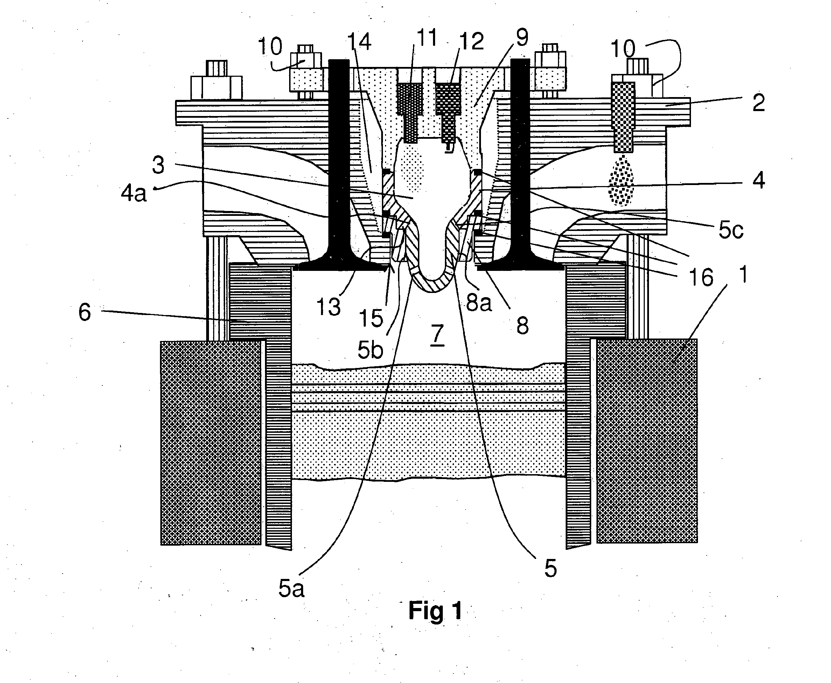

As can be seen from Fig. 1, in connection with the cylinder head 2, there is a separate pre-chamber arrangement connected to the cylinder, having a pre-chamber 3 including a body portion 4 and a cover portion 9 supported in it on one side and a nozzle portion 5 supported on the other side and provided with nozzle openings 5a. The pre-chamber 3 is connected through the nozzle openings 5a of the nozzle portion with the main combustion area 7 of the cylinder.

The cylinder head 2 has a hollow or a corresponding space 14 for the pre-chamber arrangement, wherein the body portion 4 and the nozzle portion 5 are supported on the cylinder head 2 with a separate pre-chamber bracket 8. Attachment of the pre-chamber 3 to the cylinder head 2 is arranged through the cover portion 9 by bolts 10. The cover portion 9 does not need to be separately attached to the body portion 4 nor to any other parts of the pre-chamber, rather these parts are arranged opposite each other one after the other or one on top of the other by means of suitably formed opposing surfaces such that, as the bolts 10 are tightened, they compress against one another and against the cylinder head 2, as can be seen from Fig. 1. The cover portion 9 has, in a manner known per se, so-called feeding means 11 for the pilot fuel and a spark plug 12. In Fig. 1 is also schematically shown the feeding of a lean, for example, a gaslike basic fuel into the suction channel. The ignition or combustion process itself occurs, in a manner known per se, therefore it is not described here in greater detail.

As can further be seen from Fig. 1, the lower portion of the body portion 4 is shaped in a stepped manner such that it can be fitted into the corresponding joint parts 13 of the bracket 8 of the pre-chamber. For this purpose, the parts 4 and 8 are manufactured of the same material, most preferably from steel or some other highly heat-resistant metal alloy in order that they will have the same kind of heat expansion, wherein the solution is solid and stable in all situations.

The bracket 8 of the pre-chamber has a conical surface 8a, which functions together with the first conical surface 5b of the nozzle portion 5 to support the nozzle portion 5. Correspondingly, the body portion 4 has also a conical surface 4a, which functions together with the second conical surface 5c of the nozzle portion. Consequently, the nozzle portion 8 remains held between the body portion 4 and the bracket 8 of the pre-chamber and stays solidly in place. At the same time, the bracket 8 of the pre-chamber defines the position of the nozzle portion 5 towards the main combustion area 7. Preferably, the nozzle portion 5 is made of ceramics or some corresponding material that withstands extreme heat and corrosion. The solution makes it possible for the different parts of the pre-chamber arrangement to also be detached from one another as needed and thus to be separately replaceable.

As can be seen from Fig. 1, between the bracket 8 of the pre-chamber and the cylinder head 2, there is a suitable gap 15, by means of which the differently sized heat expansions of the parts can be taken into consideration. Additionally, between the parts, there is in the attachment direction a gasket 16, which can preferably be of copper. Similar gaskets 16 can also be arranged between the bracket 8 of the pre-chamber and the body portion 4 as well as between the body portion 4 and the cover portion 9. The number, size and orientation of the nozzle openings 5a of the nozzle portion 5 are selected as needed.

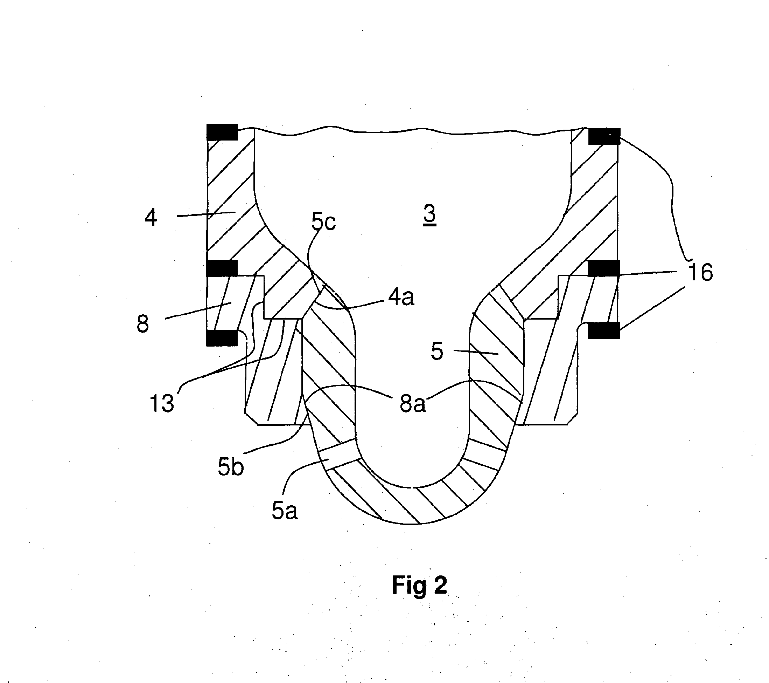

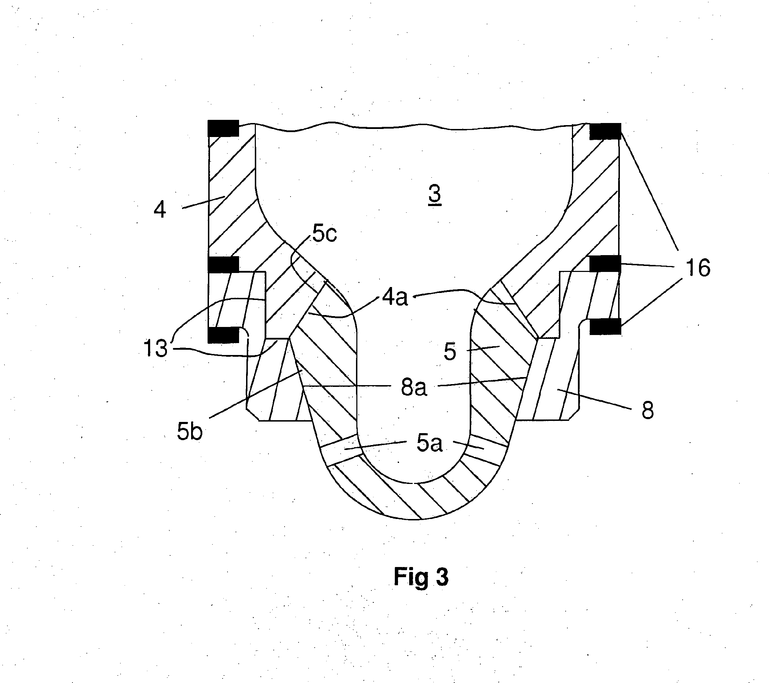

In the embodiment of Fig. 1, the bracket 8 of the pre-chamber is preferably a continuous annular piece. This can more clearly be seen from Figs. 2 and 3, which show, as enlarged views, parts of the pre-chamber 3 of the pre-chamber arrangement of Fig. 1. The embodiments of Figs. 2 and 3 differ from one another in the form and scale of their surfaces, by means of which .the nozzle portion 5 rests on the bracket 8 of the pre-chamber and the body portion 4. As can be seen in the version of Fig. 3, the conical surfaces 5b and 8a created by the wedge-like structure extend over the entire joint length of the parts 5 and 8.

## Claims

1. A pre-chamber arrangement to be fitted on the cylinder head (2) of a combustion engine (1), which comprises a separate body portion (4) and a nozzle portion (5), which are supported by one another and which together substantially define the pre-chamber (3), which is connected to a main combustion area (7) of the cylinder (6) through nozzle openings (5a) of the nozzle portion (5), whereby the pre-chamber arrangement further comprises a separate pre-chamber bracket (8), which is arranged between the cylinder head (2) and the pre-chamber (3) and through which the body portion (4) and the nozzle portion (5) are supported on the cylinder head, **characterized in that** the nozzle portion (5) comprises a first conical surface (5b), by means of which it is supported on the bracket (8) of the pre-chamber, and a second conical surface (5c), by means of which it is supported on the body portion (4), and that said conical surfaces are arranged such that the body portion (4) and the bracket (8) of the pre-chamber keep the nozzle portion (5) held firmly in place.

2. A pre-chamber arrangement according to claim 1, **characterized in that** the body portion (4) is provided with a separate cover portion, through which the pre-chamber arrangement is attached to the cylinder head (2).

3. A pre-chamber arrangement according to claim 1 or 2, **characterized in that** the pre-chamber is arranged to be installed on the cylinder head from the opposite side in relation to the main combustion area (7), wherein the bracket (8) of the pre-chamber defines the position of the nozzle portion (5) towards the main combustion area.

4. A pre-chamber arrangement according to any one of the preceding claims, **characterized in that**, between the bracket (8) of the pre-chamber and the cylinder head, there is a gap (15) in the direction of the diameter of the cylinder.

5. A pre-chamber arrangement according to any one of the preceding claims, **characterized in that** the bracket (8) of the pre-chamber, the body portion (4) and the cover portion (9) are arranged one after the other in the attachment direction of the pre-chamber (3) and between these parts as well as between the bracket (8) of the pre-chamber and the cylinder head (2) are most preferably arranged gasket rings (16).

6. A pre-chamber arrangement according to any one of the preceding claims, **characterized in that** the joint surfaces (13) between the bracket (8) of the pre-chamber and the body portion (4) are stepped.

7. A pre-chamber arrangement according to claim 2, **characterized in that** the cover portion (9) is provided with ignition means, for example, with feeding means (11) for the pilot fuel and/or with a spark plug (12).

8. A pre-chamber arrangement according to any one of the preceding claims, **characterized in that** the nozzle portion (5) is made of a heat, oxidation and/or corrosion resistant material, for example, of ceramics.

9. A pre-chamber arrangement according to any one of the preceding claims, **characterized in that** the body portion (4) and the bracket (8) of the pre-chamber are rotationally symmetric pieces and manufactured of the same material.

10. A pre-chamber arrangement according to any one of the preceding claims, **characterized in that** the body portion (4), the nozzle portion (5) and the bracket (8) of the pre-chamber (8) are replaceable parts.

## Patentansprüche

1. Vorkammeranordnung, die an dem Zylinderkopf (2) einer Verbrennungskraftmaschine (1) anzubringen ist, wobei die Anordnung einen gesonderten Gehäuseabschnitt (4) und einen Düsenabschnitt (5) umfasst, die voneinander getragen werden und die zusammen im Wesentlichen die Vorkammer (3) definieren, die durch Düsenöffnungen (5a) des Düsenabschnitts (5) mit einem Hautverbrennungsbereich (7) des Zylinders (6) verbunden ist, wobei die Vorkammeranordnung ferner eine gesonderte Vorkammerhalterung (8) umfasst, die zwischen dem Zylinderkopf (2) und der Vorkammer (3) angeordnet ist und durch die der Gehäuseabschnitt (4) und der Düsenabschnitt (5) an dem Zylinderkopf getragen werden, **dadurch gekennzeichnet, dass** der Düsenabschnitt (5) eine erste konische Fläche (5b), mit deren Hilfe er an der Halterung (8) der Vorkammer getragen wird, und eine zweite konische Fläche (5c), mit deren Hilfe er an dem Gehäuseabschnitt (4) getragen wird, umfasst und dass die konischen Flächen derart angeordnet sind, dass der Gehäuseabschnitt (4) und die Halterung (8) der Vorkammer den Düsenabschnitt (5) fest an seinem Platz gehalten lassen.

2. Vorkammeranordnung nach Anspruch 1, **dadurch gekennzeichnet, dass** der Gehäuseabschnitt (4) mit einem gesonderten Abdeckungsabschnitt versehen ist, durch den die Vorkammeranordnung an dem Zylinderkopf (2) befestigt ist.

3. Vorkammeranordnung nach Anspruch 1 oder 2, **dadurch gekennzeichnet, dass** die Vorkammer dafür angeordnet ist, von der entgegengesetzten Seite im Verhältnis zu dem Hauptverbrennungsbereich (7) an dem Zylinderkopf installiert zu werden, wobei die Halterung (8) der Vorkammer die Position des Düsenabschnitts (5) zu dem Hauptverbrennungsbereich hin definiert.

4. Vorkammeranordnung nach einem der vorhergehenden Ansprüche, **dadurch gekennzeichnet, dass** es, zwischen der Halterung (8) der Vorkammer und dem Zylinderkopf, einen Spalt (15) in der Richtung des Durchmessers des Zylinders gibt.

5. Vorkammeranordnung nach einem der vorhergehenden Ansprüche, **dadurch gekennzeichnet, dass** die Halterung (8) der Vorkammer, der Gehäuseabschnitt (4) und der Abdeckungsabschnitt (9) nacheinander in der Befestigungsrichtung der Vorkammer (3) angeordnet sind und sich zwischen diesen Teilen sowie zwischen der Halterung (8) der Vorkammer und dem Zylinderkopf (2) vorzugsweise Dichtungsringe (16) angeordnet sind.

6. Vorkammeranordnung nach einem der vorhergehenden Ansprüche, **dadurch gekennzeichnet, dass** die Verbindungsflächen (13) zwischen der Halterung (8) der Vorkammer und dem Gehäuseabschnitt (4) abgestuft sind.

7. Vorkammeranordnung nach Anspruch 2, **dadurch gekennzeichnet, dass** der Abdeckungsabschnitt (9) mit Zündmitteln, zum Beispiel mit Speisemitteln (11) für den Zündkraftstoff und/oder mit einer Zündkerze (12), versehen ist.

8. Vorkammeranordnung nach einem der vorhergehenden Ansprüche, **dadurch gekennzeichnet, dass** der Düsenabschnitt (5) aus einem hitze-, oxidations- und/oder korrosionsbeständigen Werkstoff, zum Beispiel aus Keramik, hergestellt ist.

9. Vorkammeranordnung nach einem der vorhergehenden Ansprüche, **dadurch gekennzeichnet, dass** der Gehäuseabschnitt (4) und die Halterung (8) der Vorkammer rotationssymmetrische Teile und aus dem gleichen Werkstoff gefertigt sind.

10. Vorkammeranordnung nach einem der vorhergehenden Ansprüche, **dadurch gekennzeichnet, dass** der Gehäuseabschnitt (4), der Düsenabschnitt (5) und die Halterung (8) der Vorkammer (8) austauschbare Teile sind.

## Revendications

1. Agencement de préchambre destiné à être monté sur une culasse (2) d'un moteur à combustion (1) qui comprend une partie de corps séparée (4) et une partie d'injecteur (5) qui sont supportées l'une par l'autre et qui définissent pour l'essentiel ensemble la préchambre (3) qui est raccordée à une zone de combustion principale (7) du cylindre (6) par des ouvertures d'injecteur (5a) de la partie d'injecteur (5) pour lequel l'agencement de préchambre comprend en plus un support de préchambre séparé (8) qui est disposé entre la culasse (2) et la préchambre (3) et à travers lequel la partie de corps (4) et la partie d'injecteur (5) sont supportées sur la culasse **caractérisé en ce que** la partie d'injecteur (5) comprend une première surface conique (5b) au moyen de laquelle elle est supportée sur le support (8) de la préchambre et une deuxième surface conique (5c) au moyen de laquelle elle est supportée sur la partie de corps (4) et **en ce que** lesdites surfaces coniques sont agencées de telle manière que la partie de corps (4) et le support (8) de la préchambre maintiennent fermement en place la partie d'injecteur (5).

2. Agencement de préchambre selon la revendication 1 **caractérisé en ce que** la partie de corps (4) est munie d'une partie de couverture séparée par laquelle l'agencement de préchambre est fixé à la culasse (2).

3. Agencement de préchambre selon la revendication 1 ou 2 **caractérisé en ce que** la préchambre est agencée pour être installée sur la culasse du côté opposé par rapport à la zone de combustion principale (7), dans lequel le support (8) de la préchambre définit la position de la partie d'injecteur (5) vers la zone de combustion principale.

4. Agencement de préchambre selon l'une quelconque des revendications précédentes **caractérisé en ce qu'**entre le support (8) de la préchambre et la culasse, il y a un espace (15) dans la direction du diamètre du cylindre.

5. Agencement de préchambre selon l'une quelconque des revendications précédentes **caractérisé en ce que** le support (8) de la préchambre, la partie de corps (4) et la partie de couverture (9) sont disposés l'un après l'autre dans la direction de fixation de la préchambre (3) et des bagues joints (16) sont disposés de préférence entre ces pièces ainsi qu'entre le support (8) de la préchambre et la culasse (2).

6. Agencement de préchambre selon l'une quelconque des revendications précédentes **caractérisé en ce que** les surfaces de joint (13) entre le support (8) de la préchambre et la partie de corps (4) sont étagées.

7. Agencement de préchambre selon la revendication 2 **caractérisé en ce que** la partie de couverture (9) est munie d'un moyen d'allumage, par exemple, d'un moyen d'alimentation (11) pour le carburant pilote et/ou d'une bougie (12).

8. Agencement de préchambre selon l'une quelconque des revendications précédentes **caractérisé en ce que** la partie d'injecteur (5) est faite d'un matériau résistant à la chaleur, à l'oxydation et/ou à la corrosion, par exemple, de céramique.

9. Agencement de préchambre selon l'une quelconque des revendications précédentes **caractérisé en ce que** la partie de corps (4) et le support (8) de la préchambre sont des pièces symétriques du point de vue rotation et fabriquées dans le même matériau.

10. Agencement de préchambre selon l'une quelconque des revendications précédentes **caractérisé en ce que** la partie de corps (4), la partie d'injecteur (5) et le support (8) de la préchambre (8) sont des pièces remplaçables.
